# EUROPEAN PATENT APPLICATION

(11) **EP 4 116 175 A1**
(43) Date of publication of application: **11.01.2023**
(21) Application number: 21184899.9
(22) Date of filing: 09.07.2021
(51) Int. Cl.: B62D 21/15, B60J 5/04, B62D 29/00

(54) **STRUCTURAL BEAM FOR A MOTOR VEHICLE MADE BY ROLL FORMING OF ALUMINIUM SHEET**

(71) Applicant: Constellium Singen GmbH, 78224 Singen (DE)
(72) Inventor: FEUERSTEIN, Martin, 78224 SINGEN (DE); BOEHLER, Patrick, 78464 KONSTANZ (DE); BARBIER, David, 38000 Grenoble (FR); REBUFFET, Olivier, 38000 GRENOBLE (FR)
(74) Representative: Constellium - Propriété Industrielle

(57) **Abstract**

A structural beam for a motor vehicle comprising at least one roll formed sheet made of a heat-treatable aluminium alloy, wherein said structural beam has at least one closed chamber and has minimum a tensile yield strength of at least 420MPa.

## Description

### FIELD OF THE INVENTION

The present invention relates to a structural beam for a motor vehicle made by roll forming of aluminium sheet. Such a structural beam is designed to have a high tensile yield strength. The subject matter of the invention is furthermore a method of production of such a structural beam.

### BACKGROUND

Automotive structural design is based on constitutive elements with various degrees of geometrical complexity and structural role:
- Large outer or inner element or panels with limited structural role. Outers panels main function is aspect and dent resistance, and inners panels for which main function is stiffness. Both are generally built out of sheets, particularly of metallic sheets.
- Energy absorbing elements with an important structural role. Their main function is to have a controlled deformation to absorb energy in case of an impact occurs, control the vehicle deceleration and/or protect the passenger cage. Typical examples are crash boxes or absorbers, longitudinal beams, rockers.
- Structural elements with an active structural role. Their main function is to transfer the loads (forces, moments) in case of an impact occurs, which means to deform as little as possible. This is achievable by combining a section, generally closed, and high strength (high tensile yield strength (TYS) and high ultimate tensile strength (UTS)) materials. This combination will delay as much as possible the collapsing of the structural element during compression loads or bending moments. When the geometry of structural element is slight two-dimensional, extrusions or roll formed sheets out of high strength alloys are relevant technologies to address this function. Examples are bumper beams, door upper beams, door side impact beams, floor or battery enclosures reinforcements.

The term crash management system is generally used to describe the structural module consisting of the bumper beam and the related attachments which connect the bumper beam to the longitudinal side members of the vehicle. The main goal of a crash management system is to prevent damages following an impact between a vehicle and an obstacle. A crash management system combines two of the elements constituting the automotive structural design. A crash management system includes a bumper beam typically extending laterally across the front or rear end of a vehicle, which is a structural element, and absorbers also called shock absorbers or deformation elements or crash boxes, which are energy absorbing elements. A crash management system has the ability to absorb sufficient crash energy, particularly at the beginning of a crash, to meet the OEM's requirements and to guide the remaining crash forces into the rest of the body structure. The crash management system is positioned on the front or rear structure of the vehicle such that each absorber is interposed between a side member and said bumper beam.

Structural elements such as door beam, door side impact beams, floor or battery enclosures reinforcements are mainly concerns by side impacts effects. In the case of side impacts, one of the objectives of these structural elements is to limit as much as possible the intrusion of a body outside the vehicle, such as a pole or another vehicle, into the vehicle's interior.

For example, a door impact beam is arranged within a door frame of a vehicle in order to achieve the necessary stability of the door frame in case of impact.

Structural elements such as floor or battery enclosures reinforcements for electrical vehicle, required to have a robustness which prevents the enclosure from being easily deformed even when the vehicle has an accident, and a protective function which, even when deformation reaches the enclosure, minimizes breakage of the batteries.

In order to insure the safety of passengers but also to limit the damage caused to the vehicle, vehicles are subject to a wide variety of tests and evaluations. Such tests are usually mandated by government regulations and insurance certifications.

Therefore, the structural elements are continuously optimized by the vehicle manufacturers who should often completely modify the system, to propose a better protection or also to comply to the new requirements. The improvement proposed should not imply a too much increase of weight of the vehicle in order to have less impact as possible on the environmental aspect.

Structural beams made of roll formed or press-hardened steel sheets are known however they have the disadvantage of being heavy.

Structural beams made of aluminium extruded profiles are also known but the strength which can be reached by this type of bumper beam is limited, usually to a tensile yield strength of less than 400 MPa.

The present invention solves the problem of obtaining high strength and light beams that can be used as structural element in a motor vehicle.

### SUMMARY OF THE INVENTION

An object of the invention is a structural beam for a motor vehicle comprising at least one roll formed sheet made of a heat-treatable aluminium alloy, wherein said structural beam has at least one closed chamber and has a minimum tensile yield strength of at least 420MPa.

Another object of the invention is a method to manufacture a structural beam according to the invention comprising the following steps:
a) at least one sheet made of a heat-treatable aluminium alloy is supplied in a solution heat treated, quenched and optionally aged temper,
b) said at least one sheet is roll formed into at least one roll formed sheet,
c) said at least one roll formed sheet is joined and a structural beam comprising at least one closed chamber is obtained,
d) said structural beam with at least one closed chamber is cut to length,
e) optionally said structural beam with at least one closed chamber is bent,
f) optionally said structural beam with at least one closed chamber is thermally treated,
wherein said steps are designed so that said structural beam has a minimum tensile yield strength of at least 420MPa.

Yet another object of the invention is a crash management system for a motor vehicle comprising a structural beam according to the invention.

### DESCRIPTION OF THE INVENTION

All aluminium alloys referred to in the following are designated using the rules and designations defined by the Aluminium Association in Registration Record Series that is published regularly, unless mentioned otherwise.

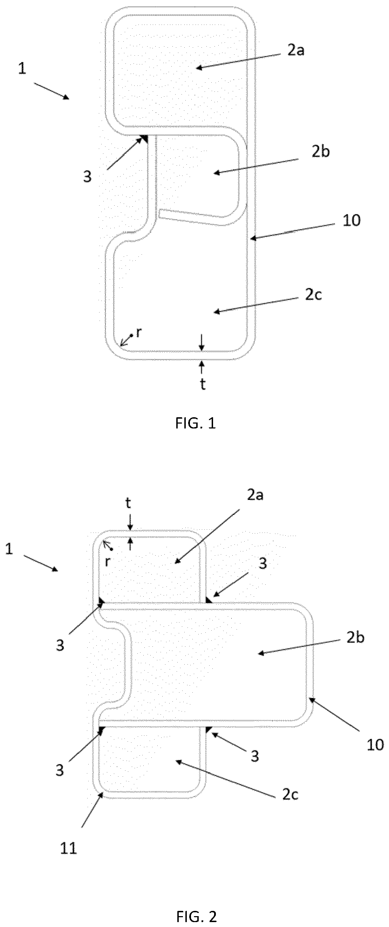

Metallurgical tempers referred to in the following are designated using the European standard EN-515. T6 temper is a solution heat treated and then artificially aged temper; this designation applies to products which are not cold worked after solution heat-treatment, or in which the effect of cold work in flattening or straightening may not be recognized in mechanical property limits. T6 temper refers to aging corresponding to the peak of tensile strength. T6x tempers are further defined according to this standard by a second digit. Preferably T6x tempers within the scope of the invention are underaged tempers such as T61, T6151, T63, T64 or T65. T7 tempers are solution heat-treated and overaged/stabilized tempers; this designation applies to products which are artificially aged after solution heat-treatment to carry them beyond a point of maximum strength to provide control of some significant characteristic other than mechanical properties. T7 tempers may be further defined by a second digit as T7x tempers such as T73, T74 or T76. Figure 2 of European standard EN-515 shows evolution of strength for tempers T6x, T6 and T7 tempers.

A vehicle structure is made of several parts (like for example crash management systems, side rails, battery box enclosures) that are continuously optimized to answer to the requirement imposed by the legislation. Structural beams are used in this parts of the vehicle structure. The structural beam is to be configured as bending-stiff as possible so that the different impact scenarios, for example collision with a pole, a bumper-to-bumper crash, collision with an obstacle or also side collision, are accounted for and an uncontrolled entering into the motor vehicle is prevented. The structural beam of the present invention is in particular able to pass the MPDP crash test.

According to the invention, the structural beam for a motor vehicle of the invention comprises at least one roll formed sheet made of a heat-treatable aluminium alloy, wherein said structural beam bumper has at least one closed chamber and has a minimum tensile yield strength of at least 420MPa.

In an embodiment of the structural beam of the invention, at least one closed chamber is obtained by joining a single rolled formed sheet. Possibly in this embodiment, the structural beam of the invention comprises a single rolled formed sheet. Typically, the single sheet is being roll formed to cause one edge of the sheet to abut to an intermediate section of the sheet or the other edge of the sheet to form a closed chamber. Alternatively, the single sheet is being roll formed to cause some intermediate sections of the sheet to get into contact to each other to form a closed chamber. Preferably, the region of abutment and/or contact is welded.

In another embodiment of the invention at least one closed chamber is obtained by joining at least two rolled formed sheets. In this embodiment at least two sheets are roll formed and joined so that they form a closed chamber. Typically, two contact zones will be needed to define the closed chamber, for example the edges of a first and second sheet abut each other or the two edges of a first sheet abuts to two intermediate section of a second sheet, or one edge of a first sheet abuts an intermediate section of a second sheet and one edge of the second sheet abuts an intermediate section of the first sheet, or one edge of a first sheet abuts an intermediate section of a second sheet and intermediate sections of the first and second sheets come into contact or intermediate sections of the first and second sheets comes into contact. In yet other embodiments at least one closed chamber may be obtained by joining three sheets or more.

In a preferred embodiment the structural beam of the invention has at least two closed chambers, more preferably at least three closed chambers and even more preferably at least four closed chambers.

At least two closed chamber may be obtained from a single roll formed sheet. For example, the sheet is being roll formed to cause one edge of the sheet to abut to an intermediate section of the sheet or the other edge of the sheet to form a first closed chamber and some other intermediate sections of the sheet comes into contact to each other and define a second closed chambers or more.

At least two closed chamber may be obtained from at least two roll formed sheet for example by abutting edge of one sheet to intermediate sections of another sheet intermediate sections of one sheet to come into contact to intermediate sections of another sheet and define a second closed chambers or more.

Advantageously at least one closed chamber is closed by welding, preferably by laser welding, more preferably by laser welding without filler wire. Within the scope of the invention, closed chambers may be closed by contact of intermediate sections without welding. According to the invention a contact is obtained when the contact distance of is less than about 1 mm.

In an embodiment a closed chamber has at least one flange. The flange may be used to fix the structural beam to the motor vehicle, or to extend the structural beam.

The structural beam according to the invention has a minimum tensile yield strength of at least 420 MPa. The minimum tensile yield strength of the structural beam according to the invention is measured on flat sections of any one of the aluminium alloy roll formed sheet which are comprised in it. If the structural beam according to the invention comprises several roll formed sheets with different alloy and/or temper, which may result in different tensile yield strength, the tensile yield strength is measured on the roll formed sheets having the lowest tensile yield strength. Preferably the structural beam of the invention has a minimum ultimate tensile strength of at least 480 MPa.

Preferably, the heat-treatable aluminium alloy is a 7XXX alloy. Advantageously said heat-treatable aluminium alloy is selected from the group consisting of AA7010, AA7012, AA7022, AA7122, AA7023, AA7032, AA7033, AA7040, AA7140, AA7050, AA7050A, AA7150, AA7250, AA7075, AA7175, AA7475, preferably AA7075, AA7175, AA7475.

Preferably at least one roll formed sheet is in a T6, T6x or T7 temper and more preferably all the roll formed sheets comprised in the structural beam of the invention are on a T6, T6x or T7 temper. T7 is preferred because higher crush resistance and higher corrosion resistance are obtained.

Preferably the structural beam of the invention has at least one closed chamber with at least one angle with a ratio r/t of less than 3.0, preferably less than 2.5 and more preferably less than 2.0. wherein r is the inner radius and t is the sheet thickness. In the present disclosure, the ratio r/t is the ratio of the bend radius (r) to the sheet thickness (t). Smaller is the r/t ratio, the more bendable is the sheet.

Preferably, the structural beam according to the invention is resistant to corrosion according to standard ASTM G85 A2 "wet" without specific e-coat.

The structural beam of the invention is made with a method comprising the following steps:
a) at least one sheet made of a heat-treatable aluminium alloy is supplied in a solution heat treated, quenched and optionally aged temper,
b) said at least one sheet is roll formed into at least one roll formed sheet,
c) said at least one roll formed sheet is joined and a structural beam comprising at least one closed chamber is obtained,
d) said structural beam with at least one closed chamber is cut to length
e) optionally said structural beam with at least one closed chamber is bent
f) optionally said structural beam with at least one closed chamber is thermally treated,
wherein said steps are designed so that said structural beam a tensile yield strength of at least 420MPa.

Preferably the joining comprises welding, preferably laser welding, more preferably laser welding without filler wire.

At least one sheet of a heat treatable aluminium alloy may be supplied in the form of a coil or of a flat sample. At least one sheet is obtained through a process comprising casting a heat treatable aluminium alloy, typically a 2XXX, 6XXX or 7XXX alloy, preferably a 7XXX alloy, optionally homogenizing, hot rolling and optionally cold rolling, solution heat treating, quenching and optionally aging. Casting is typically continuous casting or Direct Chill semi-continuous casting, the latter being preferred.

For 7xxx alloys, the composition has preferably the following characteristics:
- The zinc content is between 4 and 7% by weight. In one advantageous embodiment of the invention, the zinc content is at least 5% by weight, preferably at least 5.5% by weight and most preferably at least 5.6% by weight. In one advantageous embodiment of the invention, the zinc content is between 5.5 and 6.2% by weight and preferably between 5.6 and 6.1% by weight. In one advantageous embodiment of the invention, the zinc content is at most 6.5% by weight. In one embodiment of the invention, the zinc content is at most 6.1% by weight. When the zinc content is too high, the suitability for shaping and for assembly may be diminished. When the zinc content is too low, the minimum static mechanical properties may not be achieved.
- The copper content is between 1.0 and 3.0% by weight. In one advantageous embodiment of the invention, the copper content is at least 1.1% by weight, preferably at least 1.2% by weight and most preferably at least 1.3% by weight. In one advantageous embodiment of the invention, the copper content is between 1.2 and 2.0% by weight and preferably between 1.4 and 1.6% by weight. In one advantageous embodiment of the invention, the copper content is at most 2.5% by weight and most preferably at most 2.0% by weight. In one embodiment of the invention, the copper content is at most 1.8% by weight. When the copper content is too high, the suitability for shaping and for assembly may be diminished. When the copper content is too low, the minimum static mechanical properties may not be achieved and the corrosion resistance may be insufficient.
- The magnesium content is between 1.5 and 3.5% by weight. In one advantageous embodiment of the invention, the magnesium content is at least 1.8% by weight, preferably at least 2.0% by weight and most preferably at least 2.2% by weight. In one advantageous embodiment of the invention, the magnesium content is between 2.2 and 3.0% by weight and preferably between 2.4 and 2.8% by weight. In one advantageous embodiment of the invention, the magnesium content is at most 3.2% by weight and most preferably at most 3.0% by weight. In one embodiment of the invention, the magnesium content is at most 2.8% by weight. When the magnesium content is too high, the suitability for shaping and for assembly may be diminished. When the magnesium content is too low, the minimum static mechanical properties may not be achieved and the corrosion resistance may be insufficient.
- The iron and silicon content is at most 0.5% by weight and 0.4% by weight respectively. In one advantageous embodiment of the invention, the iron and silicon content is at most 0.2% and most preferably at most 0.15% by weight. In one advantageous embodiment of the invention, the iron content is between 0.05 and 0.25% by weight and preferably between 0.15 and 0.20% by weight. In one advantageous embodiment of the invention, the silicon content is between 0.03 and 0.15% by weight and preferably between 0.06 and 0.12% by weight. A controlled and limited iron and silicon content may help to improve the compromise between properties.
- At least one element chosen from Zr, Mn, Cr, Sc, Hf and Ti, the amount of said element, if it is chosen, being 0.05 to 0.18% by weight for Zr, 0.1 to 0.6% by weight for Mn, 0.05 to 0.3% by weight for Cr, 0.02 to 0.2% by weight for Sc, 0.05 to 0.5% by weight for Hf and 0.005 to 0.15% by weight for Ti., is added. Advantageously, the selected elements are chromium and titanium, with the chromium content being between 0.15 and 0.25% by weight, preferably between 0.17 and 0.23% by weight and most preferably between 0.18 and 0.22% by weight and the titanium content being between 0.01 and 0.10% by weight, preferably between 0.02 and 0.06% by weight. The addition of titanium, possibly combined with boron and/or carbon, helps to control the granular structure, in particular during casting. In another embodiment, the selected elements are zirconium and titanium, with the zirconium content being between 0.07 and 0.15% by weight, preferably between 0.08 and 0.13% by weight and most preferably between 0.09 and 0.12% by weight and the titanium content being between 0.01 and 0.10% by weight, preferably between 0.02 and 0.06% by weight. The other elements are inevitable impurities, which are maintained at a content of less than or equal to 0.05% by weight each and 0.15% by weight in total.

Advantageously, the alloy is one of AA7010, AA7012, AA7022, AA7122, AA7023, AA7032, AA7033, AA7040, AA7140, AA7050, AA7050A, AA7150, AA7250, AA7075, AA7175, AA7475, and preferably AA7010, AA7050, AA7075, AA7175 and AA7475.

For 7XXX alloys, homogenization at a temperature of between 450°C and 500°C is preferably carried out, the homogenization period being preferably between 5 and 60 hours.

Hot rolling is performed such as to obtain a sheet with a typical thickness of 3 to 8 mm.

Following hot rolling, it is possible to optionally cold roll the sheet obtained, in particular to obtain a final thickness of between 0.4 and 4 mm. The final thickness is preferably at most 3.0 mm and more preferably at most 2.5 mm. Advantageously, the final thickness is between 2.0 and 3.0 mm.

The sheet obtained is then solution heat treated. For 7XXX alloys, the solution heat treating temperature is preferably from 450°C to 515°C. Solution heat treatment may be performed sheet by sheet in a furnace, with the time in solution in this embodiment being advantageously between 1 minute and 1 hour. In another embodiment, solution heat treatment is performed on a continuous processing line, with the time in solution in this embodiment being advantageously between 5 seconds and one minute. The solution heat treated sheet is then quenched. Advantageously, quenching is performed using water, the temperature of which is between 20 and 60°C and preferably between 30 and 50°C.

After quenching, the sheet may optionally be subjected to leveling and/or controlled traction with permanent deformation of at least 0.5% and less than 3%. and/or be aged. In an embodiment, the sheet is not naturally or artificially aged and is in a W temper. This temper is particularly suitable for forming and may be preferred for roll forming wherein very small radii of curvature are needed. In another embodiment, the sheet is naturally aged for at least one day, typically for at least 30 days. This results in a T3 or T4 temper which is convenient as forming properties remain quite high and there is no need to rapidly form after quenching. With sheets in W, T3 or T4 tempers a further thermal treatment after roll forming and joining is usually needed in order to obtain a tensile yield strength of at least 420 MPa. In yet another embodiment, the sheet is artificially aged to a T6 (peak aged) or T6x (under aged) temper. This temper may be used in combination to a further thermal treatment after roll forming and joining in order to obtain a tensile yield strength of at least 420 MPa. In yet another embodiment, the sheet is artificially overaged to a T7 temper, preferably a T73 temper. This temper has the advantage of not requiring a further thermal treatment after roll forming and joining in order to obtain a tensile yield strength of at least 420 MPa.

Aging wherein the sheet reaches a temperature of between 60 and 140°C for 6 to 30 hours and preferably between 80 and 120°C for 8 to 20 hours is preferred; In one embodiment, heat treatment is performed at the outlet of a continuous solution heat treatment and quenching line. In this embodiment, following quenching, the sheet is re-heated to a sufficient temperature to ensure that, after coiling, the sheet reaches a temperature of between 60 and 140°C for 6 to 30 hours and preferably between 80 and 120°C for 8 to 20 hours.

The solution heat treated quenched and optionally aged sheet is then roll formed into a roll formed sheet. Roll forming is preferably carried out at room temperature. Roll forming may be carried out through a plurality of roll stations to form a specific shape.

In a first embodiment a single sheet is used to make the structural beam.

In a second embodiment at least two sheets are used to make the structural beam, for example two sheets, three sheets or four sheets. In this embodiment, the sheets are preferably made of the same heat-treatable aluminium alloy in the same temper, although using sheets made of different alloys in different temper is also a possibility. In this embodiment the sheets are roll formed typically to different complementary shapes.

At least one roll formed sheet is then joined and at least one closed chamber is obtained.

In the first embodiment wherein a single sheet is used, the single sheet has been roll formed to cause one edge of the sheet to abut to an intermediate section of the sheet or the other edge of the sheet to form a closed chamber or formed to cause some intermediate sections of the sheet to get into contact to each other to form a closed chamber. In this first embodiment the joining operation advantageously comprise secure fastening of the roll formed sheet. Preferably, at least one regions of abutment and/or contact are joined with welding. More preferably, at least one regions of abutment and/or contact are welded by laser welding.

In the second embodiment at least two sheets are used, the roll formed sheets having typically different shapes are joined and at least one closed chamber is obtained. Typically, two contact zones will be needed to define the closed chamber, for example the edges of a first and second sheet abut each other or the two edges of a first sheet abut to two intermediate section of a second sheet, or one edge of a first sheet abuts an intermediate section of a second sheet and one edge of the second sheet abuts an intermediate section of the first sheet, or one edge of a first sheet abuts an intermediate section of a second sheet and intermediate sections of the first and second sheets come into contact or intermediate sections of the first and second sheets comes into contact. In yet other embodiments at least one closed chamber may be obtained by joining three sheets or more. In this second embodiment the joining operation comprise positioning the roll formed sheets and secure fastening of the roll formed sheets. Preferably, at least two regions of abutment and/or contact are welded in this second embodiment.

Depending on the use of the structural beam of the invention in the vehicle structure (bumper beam, battery box enclosure or others), said structural beam may be bent.

In one embodiment, a number of sheets are roll formed simultaneously on parallel roll forming lines corresponding to step a) of the invention and then assembled together to form a structural beam of the invention according to steps b) to f).

The structural beam with at least one closed chamber may be thermally treated. The thermal treatment may be needed so that said structural beam has a minimum tensile yield strength of at least 420MPa. For example, if the supplied heat-treatable aluminium alloy sheets are in a W, T3 or T4 temper, a supplemental thermal treatment may be needed.

Preferably at least one roll formed sheet comprised in the structural beam is finally in a T6x, T6 or T7 temper, this temper being either the temper of the supplied sheet or the temper of the rolled formed sheet obtained after the optional thermal treatment.

The structural beam with at least one closed chamber is cut to length.

It is to be noted that the order of the optional bending step, optional thermal treatment step and cutting step of the structural beam maybe adjusted to specific manufacturing requirement. A typical order of the steps is first cutting, then bending and finally thermally treating however other sequences can be convenient in some embodiments.

A preferred final temper of all the rolled formed sheets forming the structural beam of the invention is T7.

Preferred structural beams according to the invention are bumper beams, door upper beams, door side impact beams, floor or battery enclosures reinforcements.

### DESCRIPTION OF THE DRAWING:

Figure 1 is a cross sectional view of a structural beam according to the invention obtained from one roll formed sheet joined with one welding seam and having three closed chambers.
Figure 2 is a cross sectional view of a structural beam according to the invention obtained from two roll formed sheets joined with four welding seams and having three closed chambers.
Figure 3 is a cross sectional view of a structural beam according to the invention obtained from four roll formed sheets joined with six welding seams and having three closed chambers and two flanges.
Figure 4 is a cross sectional view of a structural beam according to the invention obtained from two roll formed sheets joined with four welding seams and having three closed chambers.

List of references:
1: structural beam
2a, 2b, 2c: closed chambers
3: welding seam
4: flange
10, 11, 12, 13, 14: roll formed sheets
r: inner radius of curvature
t: roll formed sheet thickness

### DETAILED DESCRIPTION OF THE INVENTION

Throughout all the figures, same or corresponding elements may generally be indicated by same reference numerals. These depicted embodiments are to be understood as illustrative of the invention and not as limiting in any way.

Figure 1 represents an embodiment wherein the structural beam of the invention 1 is obtained from a single sheet 10. The sheet has been roll formed to define three closed chambers 2a, 2b, 2c. A welding seam 3 securely fastens the structural beam in a region where one edge of the sheet abuts an intermediate section of the roll formed sheet.

Figures 2 represents an embodiment wherein the structural beam of the invention 1 is obtained from two sheets 11, 12. The sheets have been roll formed and joined to define three closed chambers 2a, 2b, 2c. Four welding seam 3 securely fastens the structural beam regions of contact between the two edges of each roll formed sheets and intermediate region of the other roll formed sheet.

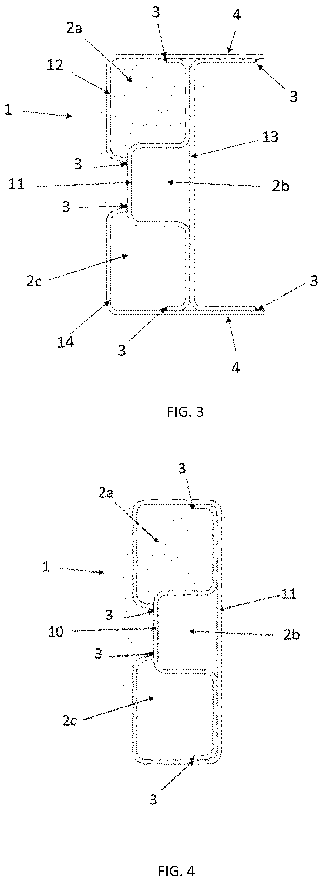

Figure 3 represents an embodiment wherein the structural beam of the invention 1 is obtained from four sheets 11, 12, 13 and 14. The sheets have been roll formed and joined to define three closed chambers 2a, 2b, 2c and two flanges 4. Six welding seam 3 securely fastens the structural beam regions of contact between the edges of roll formed sheets and intermediate region of the other roll formed sheets.

Figure 4 represents an embodiment wherein the structural beam of the invention 1 is obtained from two sheets 11, 12. The sheets have been roll formed and joined to define three closed chambers 2a, 2b, 2c. Two closed chambers 2a and 2c are closed in part by the contact of intermediate sections of the two sheets. Four welding seam 3 securely fastens the structural beam regions of contact between the two edges of each roll formed sheets and intermediate region of the other roll formed sheet.

## Claims

1. A structural beam (1) for a motor vehicle comprising at least one roll formed sheet (10, 11, 12, 13, 14) made of a heat-treatable aluminium alloy, wherein said structural beam (1) has at least one closed chamber (2a, 2b, 2c) and has minimum a tensile yield strength of at least 420MPa.

2. A structural beam (1) according to claim 1 wherein at least one closed chamber (2a, 2b, 2c) is obtained by joining a single rolled formed sheet (10).

3. A structural beam (1) according to claim 1 or claim 2 wherein at least one closed chamber (2a, 2b, 2c) is obtained by joining at least two rolled formed sheets (11, 12).

4. A structural beam (1) according to any one of claims 1 to 3 having at least two closed chambers (2a, 2b, 2c), more preferably at least three closed chambers (2a, 2b, 2c) and even more preferably at least four closed chambers (2a, 2b, 2c).

5. A structural beam (1) according to any one of claims 1 to 4 wherein at least one closed chamber (2a, 2b, 2c) is closed by welding (3), preferably by laser welding, more preferably by laser welding without filler wire.

6. A structural beam (1) according to any one of claims 1 to 5 wherein said closed chamber (2a, 2b, 2c) has at least one flange.

7. A structural beam (1) according to any one of claims 1 to 6 wherein said heat-treatable aluminium alloy is a 7XXX alloy.

8. A structural beam (1) according to any one of claims 1 to 7 wherein said at least one roll formed sheet is in a T6x, T6 or T7 temper.

9. A structural beam (1) according to any one of claims 1 to 8 wherein at least one closed chamber (2a, 2b, 2c) has at least one angle with a ratio r/t of less than 3.0, preferably less than 2.5 and more preferably less than 2.0. wherein r is the inner radius and t is the sheet thickness.

10. A method to manufacture a structural beam (1) according anyone of claim 1 to 9 comprising the following steps:
a) at least one sheet made of a heat-treatable aluminium alloy is supplied in a solution heat treated, quenched and optionally aged temper,
b) said at least one sheet is roll formed into at least one roll formed sheet (10, 11, 12, 13, 14),
c) said at least one roll formed sheet (10, 11, 12, 13, 14) is joined and a structural beam comprising at least one closed chamber (2a, 2b, 2c) is obtained,
d) said structural beam (1) with at least one closed chamber (2a, 2b, 2c) is cut to length
e) optionally said structural beam (1) with at least one closed chamber (2a, 2b, 2c) is bent
f) optionally said structural beam (1) with at least one closed chamber (2a, 2b, 2c) is thermally treated,
wherein said steps are designed so that said structural beam (1) a minimum tensile yield strength of at least 420MPa.

11. A method according to claim 10 wherein said joining comprises welding, preferably laser welding, more preferably laser welding without filler wire.

12. A method according to claim 10 or claim 11 wherein after step a) said at least one sheet is in a W, T3 or T4 temper.

13. A method according to claim 10 or claim 11 wherein after step a) said at least one sheet is in a T6 or T6x temper.

14. A method according to claim 10 or claim 11 wherein after step a) said at least one sheet is in a T7 temper, preferably T73 temper.

15. A crash management system for a motor vehicle comprising a structural beam (1) according to any claims 1 to 9.
